# EUROPÄISCHE PATENTSCHRIFT

(11) **EP 3 810 452 B1**
(45) Veröffentlichungstag und Bekanntmachung des Hinweises auf die Patenterteilung: **20.10.2021**
(21) Anmeldenummer: 20750194.1
(22) Anmeldetag: 23.07.2020
(51) Int. Cl.: B60K 15/035

(54) **VERBINDUNGSVORRICHTUNG ZUM VERBINDEN EINES AUSGLEICHSBEHÄLTERS MIT EINEM BETRIEBSFLÜSSIGKEITSBEHÄLTER, AUSGLEICHSBEHÄLTER FÜR EINEN BETRIEBSFLÜSSIGKEITSBEHÄLTER, UND BETRIEBSFLÜSSIGKEITSBEHÄLTER FÜR EIN KRAFTFAHRZEUG**
CONNECTING DEVICE FOR CONNECTING AN EQUALIZING TANK TO AN OPERATING FLUID TANK, EQUALIZING TANK FOR AN OPERATING FLUID TANK, AND OPERATING FLUID TANK FOR A MOTOR VEHICLE
DISPOSITIF D'ASSEMBLAGE POUR RELIER UN RÉSERVOIR DE COMPENSATION À UN RÉCIPIENT À LIQUIDE DE FONCTIONNEMENT, RÉSERVOIR DE COMPENSATION POUR UN RÉCIPIENT À LIQUIDE DE FONCTIONNEMENT ET RÉCIPIENT À LIQUIDE DE FONCTIONNEMENT POUR UN VÉHICULE AUTOMOBILE

(30) Priorität: 25.07.2019 DE 102019120195
(43) Veröffentlichungstag der Anmeldung: 28.04.2021
(73) Patentinhaber: Kautex Textron GmbH & Co. KG, 53229 Bonn (DE)
(72) Erfinder: WEISS, Gernot, 53819 Neunkirchen (DE); HOLZKÄMPER, Dirk, 76297 Stutensee (DE); LENZ, Stefan, 51469 Bergisch Gladbach (DE); MEHREN, Christoph, 53639 Königswinter (DE); SCHWENK, Christoph, 56743 Mendig (DE); HEINRICH, Oliver, 53757 Sankt Augustin (DE)
(74) Vertreter: Richly & Ritschel Patentanwälte PartG mbB
(86) Internationale Anmeldenummer: PCT/EP2020/070823
(87) Internationale Veröffentlichungsnummer: WO 2021/013940

(56) Entgegenhaltungen:
- WO-A1-2016/012284
- DE-A1- 10 133 400
- DE-A1- 19 932 713
- DE-A1-102017 116 881

## Beschreibung

Die vorliegende Erfindung betrifft eine Verbindungsvorrichtung zum Verbinden eines Ausgleichsbehälters mit einem Betriebsflüssigkeitsbehälter. Ferner betrifft die vorliegende Erfindung einen Betriebsflüssigkeitsbehälter für ein Kraftfahrzeug mit einem im Betriebsflüssigkeitsbehälterinnenraum angeordneten Ausgleichsbehälter.

Im Folgenden wird auf als Kraftstoffbehälter bzw. als Kraftstofftanks ausgebildete Betriebsflüssigkeitsbehälter Bezug genommen. Betriebsflüssigkeitsbehälter im Sinne der Erfindung sind insbesondere aber nicht ausschließlich Kraftstoffbehälter (für Ottokraftstoff oder Dieselkraftstoff) für Kraftfahrzeuge, Harnstoffbehälter, Wischwasserbehälter, Ölbehälter, Nebenflüssigkeitsbehälter oder Additivbehälter für Kraftfahrzeuge. Behälter der eingangs genannten Art werden häufig durch Extrusionsblasformen hergestellt, wobei sich insbesondere HDPE (High Density Polyethylene) für die Herstellung extrusionsblasgeformter Behälter eignet. Ferner ist es möglich, entsprechende Betriebsflüssigkeitsbehälter mittels eines Spritzgießverfahrens herzustellen. Weiterhin ist es auch möglich, entsprechende Betriebsflüssigkeitsbehälter durch Rotationssintern zu fertigen. Auch aus Metall gebildete Betriebsflüssigkeitsbehälter können verwendet werden.

Bei Kraftfahrzeugen mit einer Brennkraftmaschine wird bei einer Wärmebeaufschlagung eines Kraftstoffbehälters der Kraftstoff ebenfalls erwärmt, sodass der Dampfdruck des Kraftstoffs ansteigt und der Kraftstoffbehälter mit einem entsprechenden Innendruck beaufschlagt wird. Der Druckanstieg innerhalb des Kraftstoffbehälters würde so lange andauern, bis sich der Partialdruck des Kraftstoffes im Inneren des Kraftstoffbehälters dem Dampfdruck des Kraftstoffes bei der entsprechenden Temperatur angeglichen hat. Dabei ist bei hohen Umgebungstemperaturen der Partialdruck und der sich somit einstellende Innendruck des Kraftstoffbehälters größer als bei niedrigen Umgebungstemperaturen. Durch eine entsprechende Innendruckbeaufschlagung unterliegt der Kraftstoffbehälter einer Deformation. Entsprechendes gilt bei niedrigen Temperaturen, bei denen der Innendruck im Kraftstoffbehälter sinkt, so dass sich im Kraftstoffbehälter ein Unterdruck ausbildet, wodurch der Kraftstoffbehälter einer Deformation unterliegt.

Zum Entlüften eines Kraftstoffbehälters weist dieser zumindest ein Entlüftungsventil auf, das wiederum mit einer Entlüftungsleitung zum Ableiten des Überdrucks an die Atmosphäre fluidverbunden ist. Insbesondere bei einem für Ottokraftstoff ausgebildeten Kraftstoffbehälter ist dessen Entlüftungsleitung mit einem Aktivkohlefilter zum Durchleiten und Ausfiltern von Treibstoffdämpfen fluidverbunden. Die durch das Aktivkohlefilter gefilterten Gase werden nach Passieren des Aktivkohlefilters an die Atmosphäre abgegeben. Das Aktivkohlefilter wird im Betrieb der Brennkraftmaschine mittels Ansaugluft gespült, so dass in der Aktivkohle gebundene Treibstoffdämpfe der Brennkraftmaschine zugeführt werden können. Aufgrund des Spülvorgangs mit Ansaugluft kann die Größe des Aktivkohlefilters begrenzt werden.

Insbesondere Kraftfahrzeuge, die über einen Hybridantrieb verfügen, die also sowohl über einen Verbrennungsmotor als auch über einen Elektromotor zum Antreiben des Kraftfahrzeugs verfügen, benötigen einen Kraftstoffbehälter, der erhöhten Innendrücken standhalten kann. Bei solchen Hybrid-Kraftfahrzeugen wird aufgrund der verminderten Betriebszeit der Brennkraftmaschine ein mit dem Kraftstoffbehälter fluidverbundenes Aktivkohlefilter entsprechend weniger gespült, da in der elektrischen Betriebsphase des Kraftfahrzeugs das Aktivkohlefilter nicht gespült werden kann. Daher soll in elektrischen Betriebsphasen des Kraftfahrzeugs das Aktivkohlefilter nicht mit Kohlenwasserstoffen beladen werden, so dass ein Gasaustausch während der elektrischen Betriebsphase unterbunden werden soll, so dass es vorteilhaft wäre, den Kraftstoffbehälter steifer und/oder druckfester auszuführen.

Auch bei konventionellen Kraftfahrzeugen, die lediglich über einen Verbrennungsmotor zum Antreiben des Kraftfahrzeugs verfügen, ist es sinnvoll, dass ein Kraftstoffbehälter erhöhten Innendrücken standhalten kann.

Aus dem Stand der Technik ist es bekannt, den Kraftstoffbehälter durch Umwicklungen und/oder Versteifungselemente innerhalb des Kraftstoffbehälters zu versteifen.

Umwickelte Kraftstoffbehälter sind jedoch in Ihrer Herstellung aufwendig und somit kostenintensiv. Außerdem schränkt eine wirkungsvoll umwickelbare Geometrie den Gestaltungsfreiraum beim Design und damit das nutzbare Volumen ein.

Versteifungselemente innerhalb eines Kraftstoffbehälters werden mittlerweile erfolgreich eingesetzt, sodass entsprechend ausgebildete Kraftstoffbehälter erhöhten Innendrücken und auch erhöhten Unterdrücken standhalten, jedoch bewirken im Kraftstoffbehälter angeordnete und mit den Kraftstoffbehälterwänden verbundene Versteifungselemente eine Verminderung des nutzbaren Volumens des Kraftstoffbehälters.

Die WO 2016/012284 A1 beschreibt einen Kraftstoffbehälter, in dessen Kraftstoffbehälterinnenraum ein Ausgleichsbehälter angeordnet ist, der über eine optionale Adsorptionseinrichtung zur Adsorption von gasförmigen Kraftstoffbestandteilen mit der Atmosphäre fluidverbunden ist. Der Ausgleichsbehälter ist elastisch ausgebildet, so dass sich bei Überdruck im Kraftstoffbehälterinnenraum gegenüber der Atmosphäre ein Ausgleichvolumen des Ausgleichsbehälters verkleinert, wohingegen sich bei Unterdruck im Kraftstoffbehälterinnenraum gegenüber der Atmosphäre das Ausgleichvolumen vergrößert.

Bei dem aus der WO 2016/012284 A1 bekannten Kraftstoffbehälter besteht das Problem, dass die Befestigung des Ausgleichsbehälters mit dem Kraftstoffbehälter kompliziert ist und darüber hinaus Kraftstoffdämpfe mit darin enthaltenen Kohlenwasserstoffen über die Verbindungsfläche zwischen dem Ausgleichsbehälter und dem Kraftstofftank an die Umgebung abgegeben werden können.

Der vorliegenden Erfindung liegt die Aufgabe zugrunde, eine Verbindungsvorrichtung zum Verbinden eines Ausgleichsbehälters an einem Betriebsflüssigkeitsbehälter bereitzustellen, so dass der Ausgleichsbehälter in einem Innenraum des Betriebsflüssigkeitsbehälters angeordnet ist, wobei die Befestigung des Ausgleichsbehälters an dem Betriebsflüssigkeitsbehälter vereinfacht möglich ist, und wobei der fertiggestellte Betriebsflüssigkeitsbehälter eine verbesserte Dichtigkeit bezüglich Treibstoffdämpfen aufweist.

Diese der vorliegenden Erfindung zugrundeliegende Aufgabe wird durch eine Verbindungsvorrichtung mit den Merkmalen von Anspruch 1 gelöst. Vorteilhafte Ausgestaltungen der Verbindungsvorrichtung sind in den von Anspruch 1 abhängigen Ansprüchen beschrieben.

Im Genaueren wird die der vorliegenden Erfindung zugrundeliegende Aufgabe gelöst durch eine Verbindungsvorrichtung zum Verbinden eines Ausgleichsbehälters mit einem Betriebsflüssigkeitsbehälter für ein Kraftfahrzeug, so dass der Ausgleichsbehälter in einem Betriebsflüssigkeitsbehälterinnenraum angeordnet ist. Die erfindungsgemäße Verbindungsvorrichtung weist eine um eine Durchgangsöffnung der Verbindungsvorrichtung umlaufende erste Verbindungsfläche zum stoffschlüssigen Verbinden mit einer Innenfläche einer Ausgleichsbehälterwand auf. Ferner weist die Verbindungsvorrichtung eine um die Durchgangsöffnung der Verbindungsvorrichtung umlaufende zweite Verbindungsfläche zum stoffschlüssigen Verbinden mit einer Innenfläche einer Betriebsflüssigkeitsbehälterwand auf.

Die erfindungsgemäße Verbindungsvorrichtung ermöglicht eine vereinfachte Befestigung des Ausgleichsbehälters an einer Innenfläche einer Betriebsflüssigkeitsbehälterwand. Gleichzeitig gewährleistet die erfindungsgemäße Verbindungsvorrichtung, dass ein Betriebsflüssigkeitsbehälter mit in diesem angeordneten Ausgleichsbehälter, der mittels der erfindungsgemäßen Verbindungsvorrichtung mit dem Betriebsflüssigkeitsbehälter verbunden ist, verringerte Emissionen von Treibstoffdämpfen an die Umgebung aufweist. Denn die erfindungsgemäße Verbindungsvorrichtung ermöglicht, dass eine Barriereschicht (häufig als EVOH-Schicht ausgebildet) zur Vermeidung einer Diffusion von Treibstoffdämpfen, die in der Betriebsflüssigkeitsbehälterwand und/oder in der Ausgleichsbehälterwand angeordnet ist, bei der Verbindung des Ausgleichsbehälters mit der Betriebsflüssigkeitsbehälterwand mittels der erfindungsgemäßen Verbindungsvorrichtung nicht verletzt wird.

Der Ausgleichsbehälter kann auch als Volumenelement oder als Ausgleichsvolumenelement bezeichnet werden.

Eine stoffschlüssige Verbindung der Verbindungsvorrichtung mit dem Ausgleichsbehälter und/oder dem Betriebsflüssigkeitsbehälter ist vorzugsweise durch eine Verschweißung und/oder eine Verklebung realisiert.

Die Durchgangsöffnung der Verbindungsvorrichtung dient als Durchführung für einen Entlüftungseinsatz oder für eine Entlüftungsleitung. Ein Ausgleichsbehälterinnenraum ist mittels des Entlüftungseinsatzes oder der Entlüftungsleitung mit der Atmosphäre oder mit einem Adsorptionsfilter fluidverbindbar.

Die Innenfläche der Ausgleichsbehälterwand ist die Fläche, die einem Ausgleichsbehälterinnenraum zugewandt ist.

Die Innenfläche der Betriebsflüssigkeitsbehälterwand ist die Fläche, die einem Betriebsflüssigkeitsbehälterinnenraum zugewandt ist.

Ein Flächennormalenvektor der ersten Verbindungsfläche der Verbindungsvorrichtung schließt mit einem Flächennormalenvektor der zweiten Verbindungsfläche einen Winkel von mehr als 0° ein. Der Winkel beträgt vorzugsweise zwischen 0° und 135° ein. Weiter vorzugsweise beträgt der Winkel zwischen 45° und 90°.

Die erste Verbindungsfläche ist vorzugsweise als Zylinderfläche oder als Torusfläche ausgebildet.

Die zweite Verbindungsfläche ist vorzugsweise plan ausgebildet.

Die erste Verbindungsfläche und/oder die zweite Verbindungsfläche ist vorzugsweise geriffelt ausgebildet. Dadurch wird eine verbesserte Verbindung mit dem Ausgleichsbehälter und/oder dem Betriebsflüssigkeitsbehälter ermöglicht.

Die erste Verbindungsfläche und die zweite Verbindungsfläche weisen vorzugsweise den gleichen Kunststoff auf. Weiter vorzugsweise weisen die erste Verbindungsfläche und die zweite Verbindungsfläche jeweils ein Polyethylen, weiter vorzugsweise einen Polyethylen hoher Dichte auf. Es ist jedoch auch möglich, dass die erste Verbindungsfläche aus einem anderen Kunststoff besteht als die zweite Verbindungsfläche.

Die erste Verbindungsfläche kann auch als erste Schweißfläche bezeichnet werden, wenn die Innenfläche des Ausgleichsbehälters mit der ersten Verbindungsfläche verschweißt wird.

Die zweite Verbindungsfläche kann auch als zweite Schweißfläche bezeichnet werden, wenn die Innenfläche des Betriebsflüssigkeitsbehälters mit der zweiten Verbindungsfläche verschweißt wird.

Die Verbindungsvorrichtung kann auch als Verbindungsadapter oder als Schweißadapter oder als Schweißring oder als Klebeadapter oder als Klebering bezeichnet werden.

Vorzugsweise weist die Verbindungsvorrichtung eine Anschlagsfläche zum Begrenzen einer Kompressionsbewegung des Ausgleichsbehälters auf.

Vorzugsweise weist die Verbindungsvorrichtung eine erste Positionierungseinrichtung auf, wobei die Verbindungsvorrichtung unter Nutzung der ersten Positionierungseinrichtung in einer vorbestimmten Winkelposition an dem Betriebsflüssigkeitsbehälter befestigbar ist.

Die erste Positionierungseinrichtung ist vorzugsweise als ein Materialvorsprung in der Durchgangsöffnung der Verbindungsvorrichtung ausgebildet. Insbesondere für den Fall, dass die Durchgangsöffnung einen kreisrunden Querschnitt aufweist, ist durch die als Vorsprung ausgebildete erste Positionierungseinrichtung eine winkelrichtige Verbindung der Verbindungsvorrichtung mit der Innenfläche des Betriebsflüssigkeitsbehälters ermöglicht.

Die erste Positionierungseinrichtung kann auch als Materialaussparung ausgebildet sein. Die erste Positionierungseinrichtung kann auch als Verdrehsicherung bezeichnet werden.

Unter einer Nutzung der ersten Positionierungseinrichtung ist eine mechanische Wechselwirkung mit der Positionierungseinrichtung zu verstehen.

Vorzugsweise weist die Verbindungsvorrichtung eine Befestigungseinrichtung zum Befestigen einer Schutzabdeckung auf, wobei die Befestigungseinrichtung zwischen der ersten Verbindungsfläche und der zweiten Verbindungsfläche angeordnet ist.

Durch die Anordnung der Befestigungseinrichtung zwischen der ersten Verbindungsfläche und der zweiten Verbindungsfläche ist im montierten Zustand, d.h. bei Verbindung des Ausgleichsbehälters mit dem Betriebsflüssigkeitsbehälter die Schutzabdeckung zwischen der Betriebsflüssigkeitsbehälterwand und dem Ausgleichsbehälter angeordnet.

Die Schutzabdeckung dient beispielsweise als Wärmeschutz für den Ausgleichsbehälter beim Montageprozess des Ausgleichsbehälters in dem Betriebsflüssigkeitsbehälter, da während des Montageprozesses die Betriebsflüssigkeitsbehälterwand üblicherweise in warmplastischer Form vorliegt.

Weiter vorzugsweise ist die Verbindungsvorrichtung derart ausgebildet, dass die Befestigungseinrichtung zumindest eine Rastnut aufweist.

Die Rastnut ist vorzugsweise umlaufend um die Durchgangsöffnung ausgebildet. Die Rastnut ist dazu ausgebildet, eine Rastfeder bzw. Rastfinger der Schutzabdeckung aufzunehmen.

Vorzugsweise ist die Befestigungseinrichtung als Teil einer Bajonettverbindung ausgebildet, so dass die Schutzabdeckung mittels der Bajonettverbindung mit der Verbindungsvorrichtung verbunden werden kann.

Vorzugsweise weist die Verbindungsvorrichtung eine zweite Positionierungseinrichtung auf, wobei die Schutzabdeckung unter Nutzung der zweiten Positionierungseinrichtung in einer vorbestimmten Winkelposition an der Verbindungsvorrichtung befestigbar ist.

Die zweite Positionierungseinrichtung ist vorzugsweise als Radialvorsprung in der Befestigungseinrichtung ausgebildet. Alternativ kann die zweite Positionierungseinrichtung auch als Materialaussparung ausgebildet sein.

Wenn die Befestigungseinrichtung eine Rastnut aufweist, weist die Positionierungseinrichtung vorzugsweise zumindest einen in der Rastnut angeordneten Radialvorsprung auf. So lässt sich die Schutzabdeckung winkelgenau mit der Verbindungsvorrichtung verbinden, wenn die Schutzabdeckung beispielsweise eine Ausnehmung aufweist, in die der Radialvorsprung der Befestigungseinrichtung aufgenommen werden kann.

Unter einer Nutzung der zweiten Positionierungseinrichtung ist eine mechanische Wechselwirkung mit der Positionierungseinrichtung zu verstehen.

Vorzugsweise weist die Verbindungsvorrichtung eine Aufnahmefläche auf, die mit der ersten Verbindungsfläche verbunden ist, wobei die Aufnahmefläche mit der ersten Verbindungsfläche einen Winkel von mehr als 90° einschließt, und wobei die Aufnahmefläche dazu ausgebildet ist, bei einem Verbindungsvorgang des Ausgleichsbehälters mit der ersten Verbindungsfläche der Verbindungsvorrichtung eine Materialanhäufung des Ausgleichsbehälters aufzunehmen.

Die Materialanhäufung entsteht üblicherweise dadurch, dass aufgrund einer Kraftbeaufschlagung auf die Außenseite der Ausgleichsbehälterwand, die der Innenfläche der Ausgleichsbehälterwand gegenüber liegt, die mit der ersten Verbindungsfläche der Verbindungsvorrichtung verbunden ist, Material der Ausgleichsbehälterwand verdrängt wird und sich somit benachbart zum Kontaktbereich zwischen der Ausgleichsbehälterwand und der ersten Verbindungsfläche anhäuft.

Vorzugsweise schließen die Aufnahmefläche und die erste Verbindungsfläche einen Winkel zwischen 91° und 179°, weiter vorzugsweise einen Winkel zwischen 105° und 165°, nochmals weiter vorzugsweise zwischen 120° und 150° ein. Ein Winkel von 135° hat sich als besonders vorteilhaft ergeben, da beim Verbindungsprozess des Ausgleichsbehälters an die Verbindungsvorrichtung verdrängtes Material der Ausgleichsbehälterwand genügend Abstützung erfährt und sich nicht unkontrolliert an nicht vorgesehenen Stellen ansammelt.

Mittels der Aufnahmefläche, die auch als Stützfläche bezeichnet werden kann, wird somit ein Volumen beschränkt, in das die Materialanhäufung des Ausgleichsbehälters aufgenommen wird.

Vorzugsweise ist die Aufnahmefläche ein Teil der ersten Verbindungsfläche und dient auch der stoffschlüssigen Verbindung mit dem Ausgleichsbehälter. Die Aufnahmefläche kann auch als Auskragung der ersten Verbindungsfläche bezeichnet werden.

Vorzugsweise ist die Verbindungsvorrichtung als Zweikomponentenbauteil mit einer ersten Komponente und einer zweiten Komponente ausgebildet, wobei die erste Komponente die erste Verbindungsfläche und die zweite Verbindungsfläche aufweist und aus einem ersten Kunststoff gebildet ist, und wobei die zweite Komponente die Anschlagsfläche aufweist und aus einem zweiten Kunststoff gebildet ist.

Vorzugsweise sind die erste Komponente und die zweite Komponente stoffschlüssig und/oder formschlüssig miteinander verbunden.

Vorzugsweise ist die Verbindungsvorrichtung als 2K-Spritzgussbauteil ausgebildet.

Vorzugsweise besteht die erste Komponente aus einem Polyethylen (PE), weiter vorzugsweise aus einem Polyethylen hoher Dichte (HDPE), nochmals weiter vorzugsweise aus einer Mischung aus Polyethylen (PE) und Polyoxymethylen (POM). Wenn die zweite Komponente aus Polyamid besteht bzw. Polyamid umfasst, enthält die erste Komponente vorzugsweise einen Haftvermittler als Zuschlagsstoff.

Vorzugsweise besteht die zweite Komponente aus einem Polyamid (PA) und/oder aus Polyoxymethylen (POM).

Vorzugsweise sind der erste Kunststoff und der zweite Kunststoff nicht miteinander verschweißbar und/oder der zweite Kunststoff ist nicht mit dem Material des Ausgleichsbehälters verschweißbar. Dies bietet insbesondere den Vorteil, dass bei dem Verbindungsprozess zum Verbinden des Ausgleichsbehälters mit dem Betriebsflüssigkeitsbehälter bei einer Kraftbeaufschlagung über den Ausgleichsbehälter in Richtung der Innenfläche des Betriebsflüssigkeitsbehälters, so dass die zweite Verbindungsfläche auf die Innenfläche des Betriebsflüssigkeitsbehälters gedrückt wird, eine Innenfläche des Ausgleichsbehälters nicht mit der Anschlagsfläche der Verbindungsvorrichtung verschweißt wird, so dass nach dem Verbindungsprozess der Ausgleichsbehälter dekomprimierbar ist. Ein weiterer Vorteil der entsprechenden Ausbildung der Verbindungsvorrichtung ist, dass bei einer Verschweißung der Verbindungsvorrichtung mit einer Betriebsflüssigkeitsbehälterwand die zweite Komponente und somit die Verbindungsvorrichtung weder verformt noch beschädigt wird.

Vorzugsweise ist die Verbindungsvorrichtung derart ausgebildet, dass an der Anschlagsfläche zumindest eine Aussparung vorgesehen ist.

Durch die Bereitstellung der zumindest einen Aussparung kann beispielsweise eine Quetschnaht des Ausgleichsbehälters in der Aussparung aufgenommen werden, so dass bei einem Verbindungsprozess der Verbindungsvorrichtung (die bereits mit dem Ausgleichsbehälter verbunden ist) mit der Innenfläche des Betriebsflüssigkeitsbehälters durch eine Kraftbeaufschlagung auf eine Außenfläche des Ausgleichsbehälters in Richtung der Innenfläche des Betriebsflüssigkeitsbehälters die zweite Verbindungsfläche der Verbindungsvorrichtung gleichmäßig auf die Innenfläche des Betriebsflüssigkeitsbehälters gedrückt wird.

Vorzugsweise weist die Verbindungsvorrichtung einen Belüftungsanschluss auf, der mit der Durchgangsöffnung der Verbindungsvorrichtung fluidverbunden ist.

Eine Belüftung und eine Entlüftung des Ausgleichsbehälters findet somit über den Belüftungsanschluss statt. Der Belüftungsanschluss ist mit der Verbindungsvorrichtung vorzugsweise stoffschlüssig und/oder formschlüssig verbunden.

Ferner liegt der vorliegenden Erfindung die Aufgabe zugrunde, einen Ausgleichsbehälter bereitzustellen, der vereinfacht herzustellen ist, der vereinfacht mit einem Betriebsflüssigkeitsbehälter verbunden werden kann, und der eine verbesserte Dichtigkeit bezüglich Treibstoffdämpfen aufweist.

Diese der vorliegenden Erfindung zugrundeliegende Aufgabe wird durch einen Ausgleichsbehälter mit den Merkmalen von Anspruch 10 gelöst. Vorteilhafte Ausgestaltungen des Ausgleichsbehälters sind in den von Anspruch 10 abhängigen Ansprüchen beschrieben.

Im Genaueren wird diese der vorliegenden Erfindung zugrundeliegende Aufgabe durch einen Ausgleichsbehälter für einen Betriebsflüssigkeitsbehälter gelöst, wobei eine Ausgleichsbehälterwand ein Ausgleichsbehältervolumen begrenzt, wobei die Ausgleichsbehälterwand eine Öffnung des Ausgleichsbehälters umschließt, über die ein Fluidaustausch zwischen dem Ausgleichsbehältervolumen und der Atmosphäre ermöglicht ist, so dass das Ausgleichsbehältervolumen veränderlich ist, wobei sich bei Unterdruck im Ausgleichsbehälter gegenüber der Atmosphäre das Ausgleichsbehältervolumen vergrößert, und wobei sich bei Überdruck im Ausgleichsbehälter gegenüber der Atmosphäre das Ausgleichsbehältervolumen verkleinert. Der Ausgleichsbehälter ist dadurch gekennzeichnet, dass der Ausgleichsbehälter mit einer oben beschriebenen Verbindungsvorrichtung verbunden ist, wobei eine die Öffnung des Ausgleichsbehälters umschließende Innenfläche der Ausgleichsbehälterwand mit der ersten Verbindungsfläche der Verbindungsvorrichtung verbunden ist.

Der erfindungsgemäße Ausgleichsbehälter ermöglicht eine vereinfachte Befestigung an einer Innenfläche einer Betriebsflüssigkeitsbehälterwand. Gleichzeitig gewährleistet der erfindungsgemäße Ausgleichsbehälter verringerte Emissionen von Treibstoffdämpfen an die Umgebung. Durch Befestigung des Ausgleichsbehälters an einem Betriebsflüssigkeitsbehälter mittels einer Verbindungsvorrichtung ist es ermöglicht, dass eine Barriereschicht (häufig als EVOH-Schicht ausgebildet) zur Vermeidung einer Diffusion von Treibstoffdämpfen, die in der Betriebsflüssigkeitsbehälterwand und/oder in der Ausgleichsbehälterwand angeordnet ist, nicht verletzt wird.

Der Ausgleichsbehälter kann auch als Volumenelement oder als Ausgleichsvolumenelement bezeichnet werden. Der Ausgleichsbehälter ist vorzugsweise als Faltenbalg ausgebildet.

Eine stoffschlüssige Verbindung der Verbindungsvorrichtung mit dem Ausgleichsbehälter ist vorzugsweise durch eine Verschweißung und/oder eine Verklebung realisiert.

Die Ausgleichsbehälterwand ist vorzugsweise mehrschichtig ausgebildet. Vorzugsweise weist die Ausgleichsbehälterwand eine Barriereschicht auf, die sandwichartig zwischen zwei Haftvermittlerschichten angeordnet ist. Weiter vorzugsweise sind mit den zwei Haftvermittlerschichten zwei Außenschichten verbunden. Die Barriereschicht ist vorzugsweise als EVOH-Schicht ausgebildet. Die Haftvermittlerschichten sind vorzugsweise als LDPE-Schichten ausgebildet. Die Außenschichten sind vorzugsweise als PE-Schichten, weiter vorzugsweise als HDPE-Schichten ausgebildet.

Vorzugsweise weist der Ausgleichsbehälter eine Verbindungsvorrichtung auf, die eine Befestigungseinrichtung zum Befestigen einer Schutzabdeckung aufweist, wobei die Befestigungseinrichtung zwischen der ersten Verbindungsfläche und der zweiten Verbindungsfläche angeordnet ist, wobei der Ausgleichsbehälter eine Schutzabdeckung aufweist, die mittels der Befestigungseinrichtung der Verbindungsvorrichtung an dieser befestigt ist.

Ferner liegt der vorliegenden Erfindung die Aufgabe zugrunde, einen Betriebsflüssigkeitsbehälter mit einem Ausgleichsbehälter bereitzustellen, der vereinfacht herzustellen ist und der eine verbesserte Dichtigkeit bezüglich Treibstoffdämpfen aufweist.

Diese der vorliegenden Erfindung zugrundeliegende Aufgabe wird durch einen Betriebsflüssigkeitsbehälter mit den Merkmalen von Anspruch 12 gelöst. Vorteilhafte Ausgestaltungen des Betriebsflüssigkeitsbehälters sind in den von Anspruch 12 abhängigen Ansprüchen beschrieben.

Im Genaueren wird diese der vorliegenden Erfindung zugrundeliegende Aufgabe durch einen Betriebsflüssigkeitsbehälter für ein Kraftfahrzeug zur Aufnahme einer Betriebsflüssigkeit gelöst, wobei der Betriebsflüssigkeitsbehälter einen mit der Atmosphäre zumindest mittelbar fluidverbundenen Ausgleichsbehälter aufweist, wobei sich bei Überdruck im Betriebsflüssigkeitsbehälter gegenüber der Atmosphäre ein Ausgleichsbehältervolumen verkleinert, und wobei sich bei Unterdruck im Betriebsflüssigkeitsbehälter gegenüber der Atmosphäre das Ausgleichsbehältervolumen vergrößert. Der erfindungsgemäße Betriebsflüssigkeitsbehälter ist dadurch gekennzeichnet, dass der Ausgleichsbehälter mittels einer oben beschriebenen Verbindungsvorrichtung mit dem Betriebsflüssigkeitsbehälter verbunden ist, wobei die eine Öffnung des Ausgleichsbehälters umschließende Innenfläche der Ausgleichsbehälterwand mit der ersten Verbindungsfläche der Verbindungsvorrichtung verbunden ist, und wobei die Innenfläche der Betriebsflüssigkeitsbehälterwand mit der zweiten Verbindungsfläche der Verbindungsvorrichtung verbunden ist.

Der erfindungsgemäße Betriebsflüssigkeitsbehälter ermöglicht eine vereinfachte Befestigung des Ausgleichsbehälters an einer Innenfläche einer Betriebsflüssigkeitsbehälterwand. Gleichzeitig gewährleistet der erfindungsgemäße Betriebsflüssigkeitsbehälter verringerte Emissionen von Treibstoffdämpfen an die Umgebung. Durch Befestigung des Ausgleichsbehälters an dem Betriebsflüssigkeitsbehälter mittels einer Verbindungsvorrichtung ist es ermöglicht, dass eine Barriereschicht (häufig als EVOH-Schicht ausgebildet) zur Vermeidung einer Diffusion von Treibstoffdämpfen, die in der Betriebsflüssigkeitsbehälterwand und/oder in der Ausgleichsbehälterwand angeordnet ist, nicht verletzt wird.

Der Ausgleichsbehälter kann auch als Volumenelement oder als Ausgleichsvolumenelement bezeichnet werden. Der Ausgleichsbehälter ist vorzugsweise als Faltenbalg ausgebildet.

Eine stoffschlüssige Verbindung der Verbindungsvorrichtung mit dem Ausgleichsbehälter und/oder dem Betriebsflüssigkeitsbehälter ist vorzugsweise durch eine Verschweißung und/oder eine Verklebung realisiert.

Die Betriebsflüssigkeitsbehälterwand ist vorzugsweise mehrschichtig ausgebildet. Weiter vorzugsweise weist die Betriebsflüssigkeitsbehälterwand eine Barriereschicht auf, die sandwichartig zwischen zwei Haftvermittlerschichten angeordnet ist. Weiter vorzugsweise sind mit den zwei Haftvermittlerschichten zwei Außenschichten verbunden. Die Barriereschicht ist vorzugsweise als EVOH-Schicht ausgebildet. Die Haftvermittlerschichten sind vorzugsweise als LDPE-Schichten ausgebildet. Die Außenschichten sind vorzugsweise als PE-Schichten, weiter vorzugsweise als HDPE-Schichten ausgebildet. Weiter vorzugsweise ist zwischen der dem Betriebsflüssigkeitsbehälterinnenraum abgewandten Außenschicht der Betriebsflüssigkeitsbehälterwand und der Haftvermittlerschicht eine Rezyklat-Schicht angeordnet und jeweils mit den benachbarten Schichten verschweißt.

Die Ausgleichsbehälterwand ist vorzugsweise mehrschichtig ausgebildet. Vorzugsweise weist die Ausgleichsbehälterwand eine Barriereschicht auf, die sandwichartig zwischen zwei Haftvermittlerschichten angeordnet ist. Weiter vorzugsweise sind mit den zwei Haftvermittlerschichten zwei Außenschichten verbunden. Die Barriereschicht ist vorzugsweise als EVOH-Schicht ausgebildet. Die Haftvermittlerschichten sind vorzugsweise als LDPE-Schichten ausgebildet. Die Außenschichten sind vorzugsweise als PE-Schichten, weiter vorzugsweise als HDPE-Schichten ausgebildet.

Da sich bei Überdruck im Betriebsflüssigkeitsbehälter gegenüber der Atmosphäre das Ausgleichsbehältervolumen verkleinert und sich bei Unterdruck im Betriebsflüssigkeitsbehälter gegenüber der Atmosphäre das Ausgleichsbehältervolumen vergrößert, weist der Ausgleichsbehälter folglich ein variables Ausgleichsbehältervolumen auf.

Vorzugsweise ist der Betriebsflüssigkeitsbehälter derart ausgebildet, dass die Innenfläche der Ausgleichsbehälterwand mit der ersten Verbindungsfläche der Verbindungsvorrichtung verschweißt ist, und/oder die Innenfläche der Betriebsflüssigkeitsbehälterwand mit der zweiten Verbindungsfläche der Verbindungsvorrichtung verschweißt ist.

Der entsprechend ausgebildete Betriebsflüssigkeitsbehälter ist nochmals leichter und innerhalb einer kürzeren Zykluszeit herzustellen und weist nochmals niedrigere Emissionen von Kohlenwasserstoffen auf.

Vorzugsweise weist der Betriebsflüssigkeitsbehälter eine Verbindungsvorrichtung auf, die eine Befestigungseinrichtung zum Befestigen einer Schutzabdeckung aufweist, wobei die Befestigungseinrichtung zwischen der ersten Verbindungsfläche und der zweiten Verbindungsfläche angeordnet ist, wobei der Betriebsflüssigkeitsbehälter eine Schutzabdeckung aufweist, die mittels der Befestigungseinrichtung der Verbindungsvorrichtung an dieser befestigt ist, so dass die Schutzabdeckung zwischen der Betriebsflüssigkeitsbehälterwand und der Ausgleichsbehälterwand angeordnet ist.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine Schnittdarstellung der erfindungsgemäßen Verbindungsvorrichtung gemäß einer ersten Ausführungsform;
- Figur 2:: eine perspektivische Darstellung einer Verbindungsvorrichtung nach einer weiteren Ausführungsform der vorliegenden Erfindung;
- Figur 3:: eine Seitenansicht der in Figur 2 dargestellten Verbindungsvorrichtung;
- Figur 4:: eine Draufsicht auf eine Unterseite der in Figur 2 dargestellten Verbindungsvorrichtung;
- Figur 5:: eine Schnittdarstellung der in Figur 2 dargestellten Verbindungsvorrichtung;
- Figur 6:: eine Schnittdarstellung durch die in Figur 2 dargestellte Verbindungsvorrichtung mit einer mit der Verbindungsvorrichtung verbundenen Schutzabdeckung;
- Figur 7:: eine perspektivische Darstellung eines Ausgleichsbehälters, in dessen Öffnung die in Figur 2 dargestellte Verbindungsvorrichtung angeordnet ist und mit dem Ausgleichsbehälter verbunden ist;
- Figur 8:: eine Schnittdarstellung der in Figur 7 dargestellten Verbindungsvorrichtung in einem Verbindungsbereich mit dem Ausgleichsbehälter;
- Figur 9:: eine Schnittdarstellung durch einen erfindungsgemäßen Betriebsflüssigkeitsbehälter; und
- Figur 10:: eine Schnittdarstellung durch einen erfindungsgemäßen Betriebsflüssigkeitsbehälter gemäß einer weiteren Ausführungsform der vorliegenden Erfindung.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

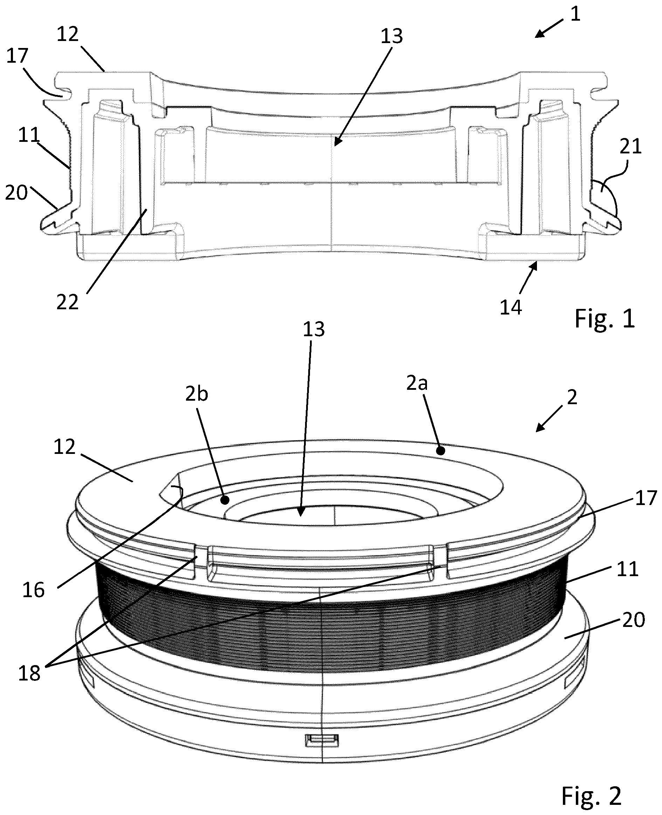

Figur 1 zeigt eine Schnittdarstellung durch eine Verbindungsvorrichtung 1 gemäß einer ersten Ausführungsform der vorliegenden Erfindung. Die in Figur 1 dargestellte Verbindungsvorrichtung ist dabei einstückig ausgebildet und aus einem Kunststoff gebildet.

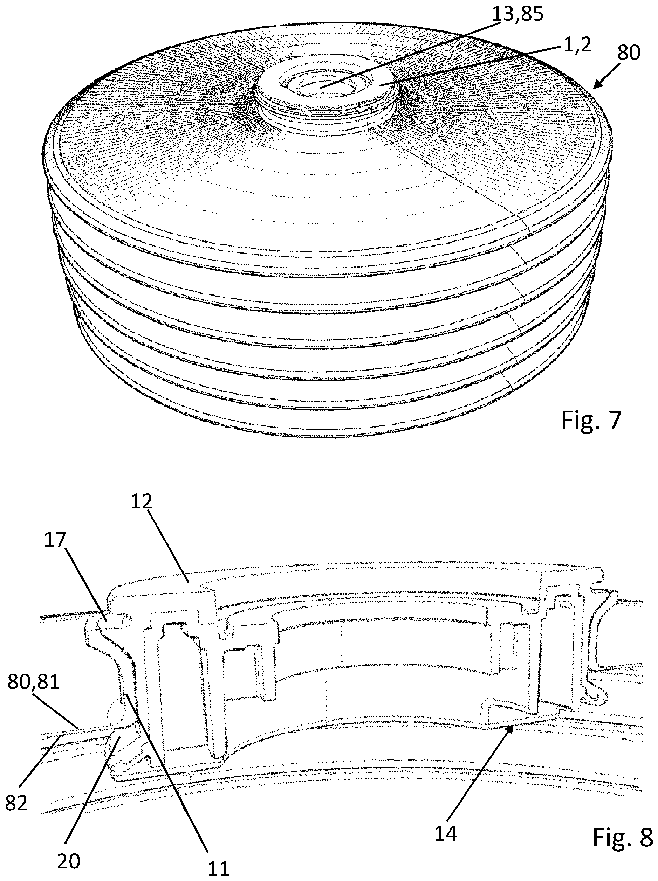

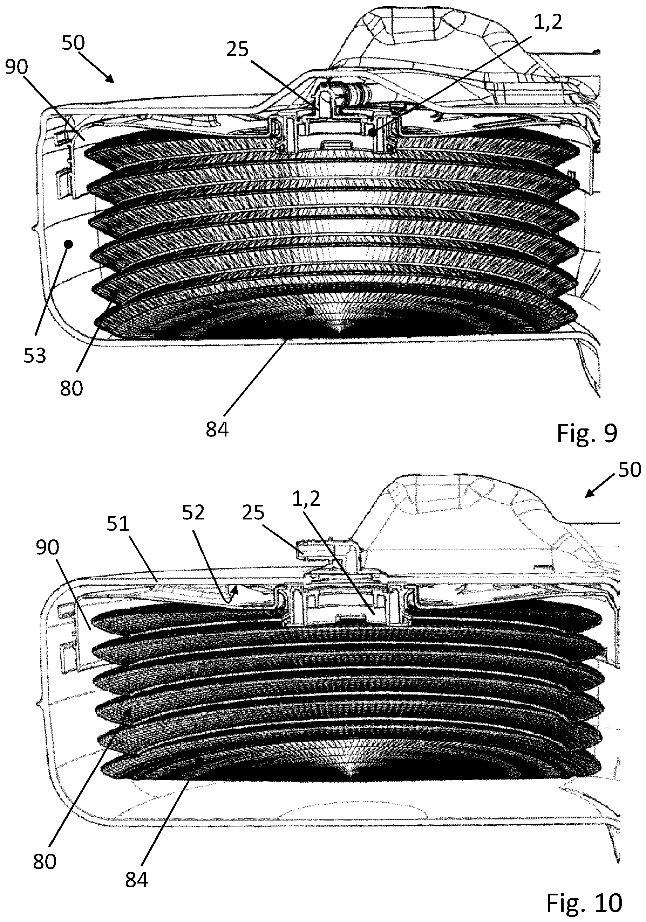

Die Verbindungsvorrichtung 1 dient zum Verbinden eines Ausgleichsbehälters 80 (siehe Figur 7) mit einem Betriebsflüssigkeitsbehälter 50 (siehe Figuren 9 und 10). Der Betriebsflüssigkeitsbehälter 50 ist in den dargestellten Ausführungsbeispielen als Kraftstoffbehälter 50 für Kraftfahrzeuge ausgebildet. Die Verbindungsvorrichtung 1 dient dem Verbinden des Ausgleichsbehälters 80 mit dem Betriebsflüssigkeitsbehälter 50 derart, dass der Ausgleichsbehälter 80 in einem Betriebsflüssigkeitsbehälterinnenraum 53 angeordnet ist.

Wie aus Figur 1 ersichtlich ist, weist die Verbindungsvorrichtung 1 eine Durchgangsöffnung 13 auf, um die umlaufend eine erste Verbindungsfläche 11 zum stoffschlüssigen Verbinden mit einer Innenfläche 82 einer Ausgleichsbehälterwand 81 vorgesehen ist. Die erste Verbindungsfläche 11 ist bei dem dargestellten Ausführungsbeispiel als Außenzylinderfläche 11 ausgebildet.

Ferner weist die Verbindungsvorrichtung 1 eine die Durchgangsöffnung 13 umlaufende zweite Verbindungsfläche 12 auf, die zum stoffschlüssigen Verbinden mit einer Innenfläche 52 einer Betriebsflüssigkeitsbehälterwand 51 ausgebildet ist. Ferner weist die Verbindungsvorrichtung 1 eine Anschlagsfläche 14 zum Begrenzen einer Kompressionsbewegung des Ausgleichsbehälters 80 auf. Die Begrenzung der Kompressionsbewegung des Ausgleichsbehälters 80 mittels der Anschlagsfläche 14 wird dadurch realisiert, dass eine Innenfläche des Ausgleichsbehälters 80 an der Anschlagsfläche 14 anschlägt.

Aus Figur 1 ist ferner ersichtlich, dass die Verbindungsvorrichtung 1 im Wesentlichen hohlförmig ausgebildet ist, wobei zur strukturellen Versteifung der Verbindungsvorrichtung 1 Versteifungsrippen 22 vorgesehen sind, die sowohl umlaufend um die Durchgangsöffnung 13 angeordnet sind als auch radial von der Durchgangsöffnung 13 hin zum Rand der Verbindungsvorrichtung 1 verlaufen.

Der Kunststoff, aus dem die in Figur 1 dargestellten Verbindungsvorrichtung 1 hergestellt ist, ist vorzugsweise ein PE-Kunststoff, weiter vorzugsweise ein HDPE-Kunststoff.

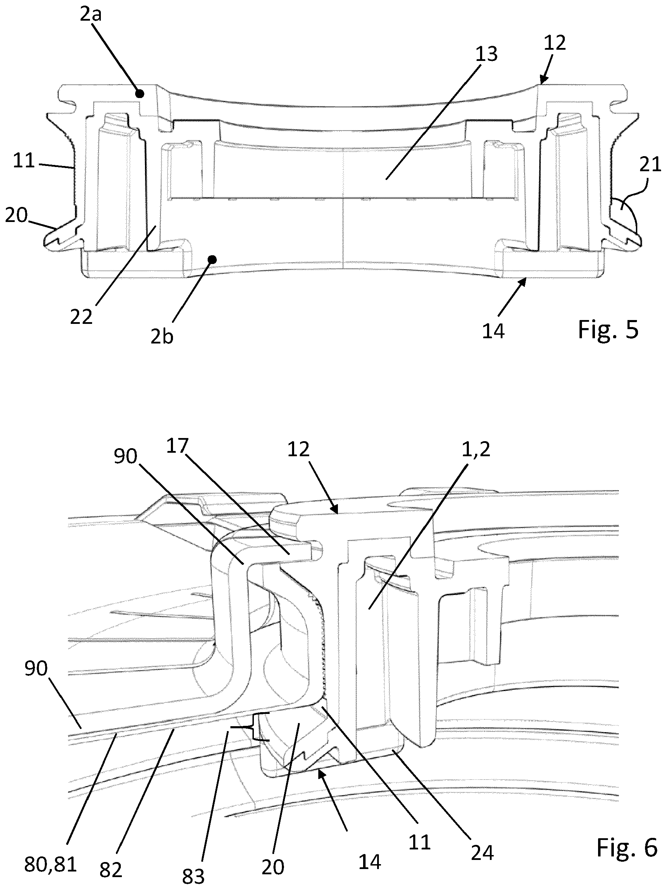

Die Verbindungsvorrichtung 1 weist ferner eine Befestigungseinrichtung 17 zum Befestigen einer Schutzabdeckung 90 (siehe Figuren 6, 9 und 10) auf, wobei die Befestigungseinrichtung 17 zwischen der ersten Verbindungsfläche 11 und der zweiten Verbindungsfläche 12 angeordnet ist. Wie aus Figur 1 ersichtlich ist, ist die Befestigungseinrichtung 17 als die Durchgangsöffnung 13 umlaufende Rastnut 17 ausgebildet.

Ferner weist die Verbindungsvorrichtung 1 eine Aufnahmefläche 20 auf, die mit der ersten Verbindungsfläche 11 verbunden ist. Die Aufnahmefläche 20 schließt mit der ersten Verbindungsfläche 11 bei der in Figur 1 dargestellten Verbindungsvorrichtung 1 einen Winkel von etwa 135° ein. Die Aufnahmefläche 20 dient dabei zur Aufnahme einer Materialanhäufung 83 einer Ausgleichsbehälterwand 81. Wie beispielsweise aus Figur 6 ersichtlich ist, wird bei einem Verbindungsvorgang des Ausgleichsbehälters 80 mit der ersten Verbindungsfläche 11 der Verbindungsvorrichtung 1 aufgrund der Druckbeaufschlagung der Ausgleichsbehälterwand 81 in Richtung der ersten Verbindungsfläche 11 Material der Ausgleichsbehälterwand 81 lokal verdickt, sodass eine Materialanhäufung 83 gebildet wird. Durch Bereitstellen der Aufnahmefläche 20 wird diese Materialanhäufung 83 durch die Aufnahmefläche 20 abgestützt, sodass eine unkontrollierte Ausbreitung von Material der Ausgleichsbehälterwand 81 verhindert wird.

In den Figuren 2 bis 5 ist eine Verbindungsvorrichtung 2 gemäß einer weiteren Ausführungsform der vorliegenden Erfindung dargestellt. Die in den Figuren 2 bis 5 dargestellte Verbindungsvorrichtung 2 unterscheidet sich von der in Figur 1 dargestellten Verbindungsvorrichtung 1 dadurch, dass die Verbindungsvorrichtung 2, die in den Figuren 2 bis 5 dargestellt ist, als Zweikomponentenbauteil 2 ausgebildet ist, wobei das Zweikomponentenbauteil 2 eine erste Komponente 2a und eine zweite Komponente 2b aufweist. Der übrige strukturelle Aufbau der in den Figuren 2 bis 5 dargestellten Verbindungsvorrichtung 2 entspricht dabei dem strukturellen Aufbau der in Figur 1 dargestellten Verbindungsvorrichtung 1.

Die Verbindungsvorrichtung 2 ist als Zweikomponentenbauteil 2 mit der ersten Komponente 2a und der zweiten Komponente 2b ausgebildet, wobei die erste Komponente 2a die erste Verbindungsfläche 11 und die zweite Verbindungsfläche 12 aufweist, und wobei die zweite Komponente 2b die Anschlagsfläche 14 aufweist. Die erste Komponente 2a ist dabei aus einem ersten Kunststoff gebildet, und die zweite Komponente 2b ist aus einem zweiten Kunststoff gebildet.

Vorzugsweise ist der erste Kunststoff, aus dem die erste Komponente 2a gebildet ist, aus einem Material gebildet, dass schweißkompatibel mit dem Material der Betriebsflüssigkeitsbehälterwand 51 und mit dem Material der Ausgleichsbehälterwand 81 ist. Beispielsweise ist die erste Komponente 2a aus einem PE-Kunststoff, weiter vorzugsweise aus einem HDPE-Kunststoff gebildet.

Der zweite Kunststoff, aus dem die zweite Komponente 2b gebildet ist, ist vorzugsweise ein Kunststoff, der nicht schweißkompatibel mit dem Material der Ausgleichsbehälterwand 81 ist, sodass bei einem Verbindungsprozess des Ausgleichsbehälters 80 mit dem Betriebsflüssigkeitsbehälter 50, bei dem ein Druck von einer Unterseite auf den Ausgleichsbehälter 80 in Richtung einer Innenfläche 52 der Betriebsflüssigkeitsbehälterwand 81 ausgebildet wird, der Kunststoff der Ausgleichsbehälterwand 81 nicht an der Anschlagsfläche 14 der zweiten Komponente 2b angeheftet. Beispielsweise ist der zweite Kunststoff ein POM-Kunststoff.

Aus Figur 2 ist weiter ersichtlich, dass die erste Verbindungsfläche 11 geriffelt ausgebildet ist, sodass bei einem Verbindungsvorgang mit einer Ausgleichsbehälterwand 81 eine vergrößerte Fläche bereitsteht und eine innigere Verbindung mit der Innenfläche 82 der Ausgleichsbehälterwand 81 ermöglicht wird.

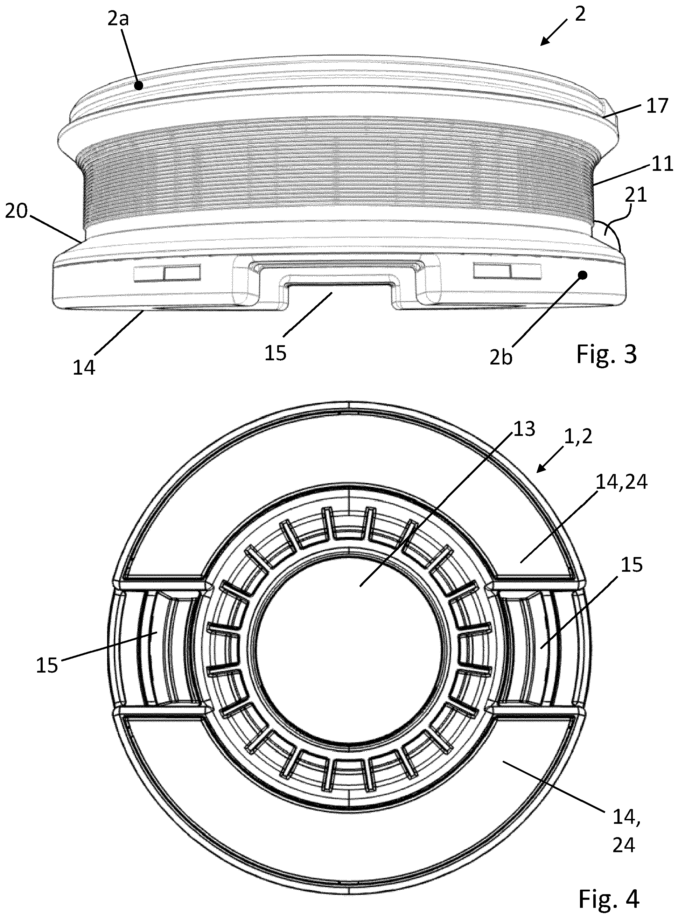

Aus den Figuren 3 bis 4 ist ersichtlich, dass die Anschlagsfläche 14 zwei Aussparungen 15 aufweist. Die Aussparungen 15 dienen dabei der Aufnahme von beispielsweise einer Quetschnaht des Ausgleichsbehälters 80, sodass die Materialverdickung, die durch die Quetschnaht des der Ausgleichsbehälterwand 81 realisiert ist, in der Aussparung bzw. in den Aussparungen 15 aufgenommen ist. Somit wird bei einem Verbindungsprozess des Ausgleichsbehälters 80 mit dem Betriebsflüssigkeitsbehälter 50 und bei einer entsprechenden Druckbeaufschlagung über den Ausgleichsbehälter 80 in Richtung der Innenfläche 52 der Betriebsflüssigkeitsbehälterwand 51 aufgrund der Aufnahme der Quetschnaht des Ausgleichsbehälters 80 die zweite Verbindungsfläche 12 der Verbindungsvorrichtung 1, 2 gleichmäßig gegen die Innenfläche 52 der Betriebsflüssigkeitsbehälterwand 51 gedrückt, sodass eine gleichmäßigere Verschweißung zwischen der zweiten Verbindungsfläche 12 und der Innenfläche 52 der Betriebsflüssigkeitsbehälterwand 51 erreicht wird.

Aus Figur 2 ist ferner ersichtlich, dass die Verbindungsvorrichtung 2 (im Übrigen auch die Verbindungsvorrichtung 1, die in Figur 1 dargestellt ist) eine erste Positionierungseinrichtung 16 aufweist. Die erste Positionierungseinrichtung 16 ist als ein Materialvorsprung 16 in der Durchgangsöffnung 13 der Verbindungsvorrichtung 2 ausgebildet. Da die Durchgangsöffnung 13 einen kreisrunden Querschnitt aufweist, ist durch die als Vorsprung 16 ausgebildete erste Positionierungseinrichtung 16 eine winkelrichtige Verbindung der Verbindungsvorrichtung 1, 2 mit der Innenfläche 52 des Betriebsflüssigkeitsbehälters 50 ermöglicht.

Aus Figur 2 ist weiterhin ersichtlich, dass die Verbindungsvorrichtung 2 (und im Übrigen auch die Verbindungsvorrichtung 1, die in Figur 1 dargestellt ist) eine zweite Positionierungseinrichtung 18 aufweist. Bei dem dargestellten Ausführungsbeispiel weist die zweite Positionierungseinrichtung 18 zwei Radialvorsprünge 18 auf, mittels denen eine Schutzabdeckung 90 (siehe Figuren 6, 9 und 10) in einer vorbestimmten Winkelposition an der Verbindungsvorrichtung 1, 2 befestigbar ist.

Figur 4 zeigt eine Draufsicht auf die Unterseite der Verbindungsvorrichtung 1, 2. In Figur 4 ist die Verbindungsvorrichtung 1, 2 mit in entsprechenden Aufnahmeöffnungen eingerasteten Deckeln 24 dargestellt. Mittels der Deckel 24 wird erreicht, dass eine gleichmäßigere Kraftbeaufschlagung von der Ausgleichsbehälterwand 81 auf die Anschlagsfläche 14 ermöglicht ist. Die Deckel 24 sind von der Verbindungsvorrichtung 1, 2 demontierbar.

Figur 6 zeigt einen Schnitt durch einen Teil der Verbindungsvorrichtung 1, 2, wobei mittels der Befestigungseinrichtung 17 eine Schutzabdeckung 90 an der Verbindungsvorrichtung 1, 2 befestigt ist. Es ist ersichtlich, dass Haltefedern der Schutzabdeckung 90 in die Rastnut 17 eingreifen.

Der Ausgleichsbehälter 80 ist mit der Verbindungsvorrichtung 1, 2 derart verbunden, dass die Innenfläche 82 der Ausgleichsbehälterwand 81 mit der ersten Verbindungsfläche 11 verschweißt ist. Ferner ist aus Figur 6 ersichtlich, dass im Übergangsbereich zwischen der ersten Verbindungsfläche 11 und der Aufnahmefläche 20 ein Aufnahmevolumen gebildet ist, in dem eine Materialanhäufung 83 der Ausgleichsbehälterwand 81 aufgenommen werden kann.

Figur 7 ist eine perspektivische Darstellung eines erfindungsgemäßen Ausgleichsbehälters 80, der mit einer Verbindungsvorrichtung 1, 2, wie diese mit Bezug auf die Figuren 1 bis 6 oben beschrieben wurde, verschweißt ist. In Figur 8 ist der Verbindungsbereich zwischen der Verbindungsvorrichtung 1, 2 und dem Ausgleichsbehälter 80 dargestellt. Es ist ersichtlich, dass eine Ausgleichsbehälterwand 81 ein Ausgleichsbehältervolumen 84 (siehe Figuren 9 und 10) begrenzt. Die Ausgleichsbehälterwand 81 umschließt eine Öffnung 85 (siehe Figur 7) des Ausgleichsbehälters 80, über die ein Fluidaustausch zwischen dem Ausgleichsbehältervolumen 84 und der Atmosphäre ermöglicht ist, sodass das Ausgleichsbehältervolumen 84 veränderlich ist. Wenn der Ausgleichsbehälter 80 in einem Betriebsflüssigkeitsbehälter 50 eingebaut ist (siehe Figuren 9 und 10), vergrößert sich bei Unterdruck im Betriebsflüssigkeitsbehälter 50 gegenüber der Atmosphäre das Ausgleichsbehältervolumen 84, wohingegen sich bei Überdruck im Betriebsflüssigkeitsbehälter 50 gegenüber der Atmosphäre das Ausgleichsbehältervolumen 84 verkleinert.

Bei den in den Figuren 7 bis 10 dargestellten Ausführungsbeispiel des Ausgleichsbehälters 80 ist der Ausgleichsbehälter 80 als ein Faltenbalg 80 ausgebildet. Jedoch ist die vorliegende Erfindung nicht darauf beschränkt, denn der Ausgleichsbehälter 80 kann auch beispielsweise aus einem elastischen Material gebildet sein. Ferner kann der Ausgleichsbehälter 80 als Beutel ausgebildet sein.

Insbesondere aus Figur 8 ist ersichtlich, dass der Ausgleichsbehälter 80 mit der Verbindungsvorrichtung 1, 2 so verbunden ist, dass eine die Öffnung 85 des Ausgleichsbehälters 80 umschließende Innenfläche 82 der Ausgleichsbehälterwand 81 mit der ersten Verbindungsfläche 11 der Verbindungsvorrichtung 1, 2 verschweißt ist.

In den Figuren 9 und 10 sind erfindungsgemäße Betriebsflüssigkeitsbehälter 50 dargestellt. Die Betriebsflüssigkeitsbehälter 50 sind dabei als Kraftstofftanks 50 für Kraftfahrzeuge ausgebildet. Die Betriebsflüssigkeitsbehälter 50 weisen jeweils ein Ausgleichsbehälter 80 auf, der zumindest mittelbar mit der Atmosphäre fluidverbunden ist. Beispielsweise kann zwischen dem Ausgleichsbehältervolumen 84 und der Atmosphäre noch ein Adsorptionsfilter in Form eines Aktivkohlefilters zwischengeschaltet sein.

Wie aus Figur 9 ersichtlich ist, verläuft eine Entlüftungsleitung, über die ein Fluidaustausch des Ausgleichsbehältervolumens 84 mit der Atmosphäre ermöglicht ist, innerhalb des Betriebsflüssigkeitsbehälterinnenraums 53, wohingegen ein Belüftungsanschluss 25 des in Figur 10 dargestellten Betriebsflüssigkeitsbehälters 50 durch die Betriebsflüssigkeitsbehälterwand 51 hindurchragt und dort an eine Entlüftungsleitung, die in Figur 10 nicht dargestellt ist, angeschlossen werden kann.

Die Funktionsweise der in den Figuren 9 und 10 dargestellten Ausgleichsbehälter 80 ist dabei derart, dass bei Überdruck im Betriebsflüssigkeitsbehälter 50 gegenüber der Atmosphäre sich das Ausgleichsbehältervolumen 84 verkleinert, wohingegen sich bei Unterdruck im Betriebsflüssigkeitsbehälter 50 gegenüber der Atmosphäre sich das Ausgleichsbehältervolumen 84 vergrößert.

Die Verbindung des Ausgleichsbehälters 80 mit der Verbindungsvorrichtung 1, 2 ist identisch, wie diese oben mit Bezug auf die Figuren 7 und 8 beschrieben wurde. Der Ausgleichsbehälter 80 ist mittels der Verbindungsvorrichtung 1, 2 ferner mit dem Betriebsflüssigkeitsbehälter 50 verbunden, wobei die Innenfläche 52 der Betriebsflüssigkeitsbehälterwand 51 mit der zweiten Verbindungsfläche 12 der Verbindungsvorrichtung 1, 2 verschweißt ist.

Aus den Figuren 9 und 10 ist ferner ersichtlich, dass die jeweiligen Betriebsflüssigkeitsbehälter 50 jeweils eine Schutzabdeckung 90 aufweisen, die mittels der Befestigungseinrichtung 17 der Verbindungseinrichtung 1, 2 an der Verbindungsvorrichtung 1, 2 befestigt ist, sodass die Schutzabdeckung 90 zwischen der Betriebsflüssigkeitsbehälterwand 81 und der Ausgleichsbehälter Wand 81 angeordnet ist.

### Bezugszeichenliste

- 1: Verbindungsvorrichtung
- 2: Zweikomponentenbauteil
- 2a: erste Komponente (des Zweikomponentenbauteils)
- 2b: zweite Komponente (des Zweikomponentenbauteils)
- 11: erste Verbindungsfläche (der Verbindungsvorrichtung)
- 12: zweite Verbindungsfläche (der Verbindungsvorrichtung)
- 13: Durchgangöffnung (der Verbindungsvorrichtung)
- 14: Anschlagsfläche (der Verbindungsvorrichtung)
- 15: Aussparung (der Anschlagsfläche)
- 16: erste Positionierungseinrichtung (der Verbindungsvorrichtung)
- 17: Befestigungseinrichtung / Rastnut
- 18: zweite Positionierungseinrichtung (der Halteeinrichtung)
- 19: zweite Positionierungseinrichtung / Radialvorsprung (der Verbindungsvorrichtung)
- 20: Aufnahmefläche (der Verbindungsvorrichtung)
- 21: Winkel (zwischen Aufnahmefläche und erste Verbindungsfläche)
- 22: Versteifungsrippe
- 23: Aufnahme (für Deckel)
- 24: Deckel
- 25: Belüftungsanschluss
- 50: Betriebsflüssigkeitsbehälter
- 51: Betriebsflüssigkeitsbehälterwand
- 52: Innenfläche der Betriebsflüssigkeitsbehälterwand
- 53: Betriebsflüssigkeitsbehälterinnenraum
- 80: Ausgleichsbehälter
- 81: Ausgleichsbehälterwand
- 82: Innenfläche (der Ausgleichsbehälterwand)
- 83: Materialanhäufung (des Ausgleichsbehälters)
- 84: Ausgleichsbehältervolumen
- 85: Öffnung (des Ausgleichsbehälters)
- 90: Schutzabdeckung

## Patentansprüche

1. Verbindungsvorrichtung (1, 2) zum Verbinden eines Ausgleichsbehälters (80) mit einem Betriebsflüssigkeitsbehälter (50) für ein Kraftfahrzeug, so dass der Ausgleichsbehälter (80) in einem Betriebsflüssigkeitsbehälterinnenraum (53) angeordnet ist, **dadurch gekennzeichnet, dass** die Verbindungsvorrichtung (1, 2) Folgendes aufweist:
- eine um eine Durchgangsöffnung (13) der Verbindungsvorrichtung (1, 2) umlaufende erste Verbindungsfläche (11) zum stoffschlüssigen Verbinden mit einer Innenfläche (82) einer Ausgleichsbehälterwand (81); und
- eine um die Durchgangsöffnung (13) der Verbindungsvorrichtung (1, 2) umlaufende zweite Verbindungsfläche (12) zum stoffschlüssigen Verbinden mit einer Innenfläche (52) einer Betriebsflüssigkeitsbehälterwand (51).

2. Verbindungsvorrichtung (1, 2) nach Anspruch 1, **dadurch gekennzeichnet, dass** die Verbindungsvorrichtung (1, 2) eine Anschlagsfläche (14) zum Begrenzen einer Kompressionsbewegung des Ausgleichsbehälters (80) aufweist.

3. Verbindungsvorrichtung (1, 2) nach einem der vorhergehenden Ansprüchen, **gekennzeichnet durch** die folgenden Merkmale:
- die Verbindungsvorrichtung (1, 2) weist eine erste Positionierungseinrichtung (16) auf; und
- die Verbindungsvorrichtung (1, 2) ist unter Nutzung der ersten Positionierungseinrichtung (16) in einer vorbestimmten Winkelposition an dem Betriebsflüssigkeitsbehälter (50) befestigbar.

4. Verbindungsvorrichtung (1, 2) nach einem der vorhergehenden Ansprüchen, **gekennzeichnet durch** die folgenden Merkmale:
- die Verbindungsvorrichtung (1, 2) weist eine Befestigungseinrichtung (17) zum Befestigen einer Schutzabdeckung (90) auf; und
- die Befestigungseinrichtung (17) ist zwischen der ersten Verbindungsfläche (11) und der zweiten Verbindungsfläche (12) angeordnet.

5. Verbindungsvorrichtung (1, 2) nach Anspruch 4, **dadurch gekennzeichnet, dass** die Befestigungseinrichtung (17) zumindest eine Rastnut (17) aufweist.

6. Verbindungsvorrichtung (1, 2) nach Anspruch 4 oder 5, **gekennzeichnet durch** die folgenden Merkmale:
- die Verbindungsvorrichtung (1, 2) weist eine zweite Positionierungseinrichtung (18) auf; und
- die Schutzabdeckung (90) ist unter Nutzung der zweiten Positionierungseinrichtung (18) in einer vorbestimmten Winkelposition an der Verbindungsvorrichtung (1, 2) befestigbar.

7. Verbindungsvorrichtung (1, 2) nach einem der vorhergehenden Ansprüchen, **gekennzeichnet durch** die folgenden Merkmale:
- die Verbindungsvorrichtung (1, 2) weist eine Aufnahmefläche (20) auf, die mit der ersten Verbindungsfläche (11) verbunden ist;
- die Aufnahmefläche (20) schließt mit der ersten Verbindungsfläche (11) einen Winkel (21) von mehr als 90° ein; und
- die Aufnahmefläche (20) ist dazu ausgebildet, bei einem Verbindungsvorgang des Ausgleichsbehälters (80) mit der ersten Verbindungsfläche (11) der Verbindungsvorrichtung (1, 2) eine Materialanhäufung (83) des Ausgleichsbehälters (80) aufzunehmen.

8. Verbindungsvorrichtung (1, 2) nach einem der vorhergehenden Ansprüchen, **gekennzeichnet durch** die folgenden Merkmale:
- die Verbindungsvorrichtung (1, 2) ist als Zweikomponentenbauteil (1, 2) mit einer ersten Komponente (2a) und einer zweiten Komponente (2b) ausgebildet;
- die erste Komponente (2a) weist die erste Verbindungsfläche (11) und die zweite Verbindungsfläche (12) auf und ist aus einem ersten Kunststoff gebildet; und
- die zweite Komponente (2b) weist die Anschlagsfläche (14) auf und ist aus einem zweiten Kunststoff gebildet.

9. Verbindungsvorrichtung (1, 2) nach einem der vorhergehenden Ansprüchen, **dadurch gekennzeichnet, dass** an der Anschlagsfläche (14) zumindest eine Aussparung (15) vorgesehen ist.

10. Verbindungsvorrichtung (1, 2) nach einem der vorhergehenden Ansprüchen, **dadurch gekennzeichnet, dass** die Verbindungsvorrichtung (1, 2) einen Belüftungsanschluss (25) aufweist, der mit der Durchgangsöffnung (13) der Verbindungsvorrichtung (1, 2) fluidverbunden ist.

11. Ausgleichsbehälter (80) für einen Betriebsflüssigkeitsbehälter (50), aufweisend die folgenden Merkmale:
- eine Ausgleichsbehälterwand (81) zum Begrenzen eines Ausgleichsbehältervolumens (84);
- die Ausgleichsbehälterwand (81) umschließt eine Öffnung (85) des Ausgleichsbehälters (80), über die ein Fluidaustausch zwischen dem Ausgleichsbehältervolumen (84) und der Atmosphäre ermöglicht ist, so dass das Ausgleichsbehältervolumen (84) veränderlich ist;
- bei Unterdruck im Ausgleichsbehälter (80) gegenüber der Atmosphäre vergrößert sich das Ausgleichsbehältervolumen (84) ;
- bei Überdruck im Ausgleichsbehälter (80) gegenüber der Atmosphäre verkleinert sich das Ausgleichsbehältervolumen (84),
wobei der Ausgleichsbehälter (80) **dadurch gekennzeichnet ist, dass** der Ausgleichsbehälter (80) mit einer Verbindungsvorrichtung (1, 2) nach einem der vorhergehenden Ansprüche verbunden ist, wobei eine die Öffnung (85) des Ausgleichsbehälters (80) umschließende Innenfläche (82) der Ausgleichsbehälterwand (81) mit der ersten Verbindungsfläche (11) der Verbindungsvorrichtung (1, 2) verbunden ist.

12. Ausgleichsbehälter (80) nach Anspruch 10, **gekennzeichnet durch** die folgenden Merkmale:
- der Ausgleichsbehälter (80) weist eine Verbindungsvorrichtung (1, 2) nach Anspruch 3 oder nach einem von Anspruch 4 abhängigen Anspruch auf; und
- der Ausgleichsbehälter (80) weist eine Schutzabdeckung (90) auf, die mittels der Befestigungseinrichtung (17) der Verbindungsvorrichtung (1, 2) an dieser befestigt ist.

13. Betriebsflüssigkeitsbehälter (50) für ein Kraftfahrzeug zur Aufnahme einer Betriebsflüssigkeit, wobei der Betriebsflüssigkeitsbehälter (50) einen mit der Atmosphäre zumindest mittelbar fluidverbundenen Ausgleichsbehälter (80) aufweist, wobei der Betriebsflüssigkeitsbehälter (50) folgende Merkmale aufweist:
- bei Überdruck im Betriebsflüssigkeitsbehälter (50) gegenüber der Atmosphäre verkleinert sich ein Ausgleichsbehältervolumen (84);
- bei Unterdruck im Betriebsflüssigkeitsbehälter (50) gegenüber der Atmosphäre vergrößert sich das Ausgleichsbehältervolumen (84),
wobei der Betriebsflüssigkeitsbehälter (50) **dadurch gekennzeichnet ist, dass**
- der Ausgleichsbehälter (80) mittels einer Verbindungsvorrichtung (1, 2) nach einem der Ansprüche 1 bis 10 mit dem Betriebsflüssigkeitsbehälter (50) verbunden ist,
- wobei die eine Öffnung (85) des Ausgleichsbehälters (80) umschließende Innenfläche (82) der Ausgleichsbehälterwand (81) mit der ersten Verbindungsfläche (11) der Verbindungsvorrichtung (1, 2) verbunden ist, und
- wobei die Innenfläche (52) der Betriebsflüssigkeitsbehälterwand (51) mit der zweiten Verbindungsfläche (12) der Verbindungsvorrichtung (1, 2) verbunden ist.

14. Betriebsflüssigkeitsbehälter (50) nach Anspruch 13, **gekennzeichnet durch** die folgenden Merkmale:
- die Innenfläche (82) der Ausgleichsbehälterwand (81) ist mit der ersten Verbindungsfläche (11) der Verbindungsvorrichtung (1, 2) verschweißt; und/oder
- die Innenfläche (52) der Betriebsflüssigkeitsbehälterwand (51) ist mit der zweiten Verbindungsfläche (12) der Verbindungsvorrichtung (1, 2) verschweißt.

15. Betriebsflüssigkeitsbehälter (50) nach Anspruch 13 oder 14, **gekennzeichnet durch** die folgenden Merkmale:
- der Betriebsflüssigkeitsbehälter (50) weist eine Verbindungsvorrichtung (1, 2) nach Anspruch 4 oder nach einem von Anspruch 3 abhängigen Anspruch auf; und
- der Betriebsflüssigkeitsbehälter (50) weist eine Schutzabdeckung (90) auf, die mittels der Befestigungseinrichtung (17) der Verbindungsvorrichtung (1, 2) an dieser befestigt ist, so dass die Schutzabdeckung (90) zwischen der Betriebsflüssigkeitsbehälterwand (51) und der Ausgleichsbehälterwand (81) angeordnet ist.

## Claims

1. Connecting device (1, 2) for connecting an expansion tank (80) to an operating fluid tank (50) for a motor vehicle, such that the expansion tank (80) is arranged in an operating fluid tank interior (53), **characterized in that** the connecting device (1, 2) comprises the following:
- a first connecting surface (11) which surrounds a through-opening (13) of the connecting device (1, 2) for integrally bonded connection to an inner surface (82) of an expansion tank wall (81); and
- a second connecting surface (12) which surrounds the through-opening (13) of the connecting device (1, 2) for integrally bonded connection to an inner surface (52) of an operating fluid tank wall (51).

2. Connecting device (1, 2) according to claim 1, **characterized in that** the connecting device (1, 2) has a stop surface (14) for limiting a compressive movement of the expansion tank (80).

3. Connecting device (1, 2) according to either of the preceding claims, **characterized by** the following features:
- the connecting device (1, 2) has a first positioning means (16); and
- the connecting device (1, 2) can be attached to the operating fluid tank (50) in a predetermined angular position using the first positioning means (16).

4. Connecting device (1, 2) according to any of the preceding claims, **characterized by** the following features:
- the connecting device (1, 2) has an attachment means (17) for attaching a protective cover (90); and
- the attachment means (17) is arranged between the first connecting surface (11) and the second connecting surface (12).

5. Connecting device (1, 2) according to claim 4, **characterized in that** the attachment means (17) has at least one locking groove (17).

6. Connecting device (1, 2) according to either claim 4 or claim 5, **characterized by** the following features:
- the connecting device (1, 2) has a second positioning means (18); and
- the protective cover (90) can be attached to the connecting device (1, 2) in a predetermined angular position using the second positioning means (18).

7. Connecting device (1, 2) according to any of the preceding claims, **characterized by** the following features:
- the connecting device (1, 2) has a receiving surface (20) which is connected to the first connecting surface (11);
- the receiving surface (20) encloses an angle (21) of more than 90° together with the first connecting surface (11); and
- the receiving surface (20) is designed to receive an accumulation of material (83) from the expansion tank (80) during a connection process of the expansion tank (80) to the first connecting surface (11) of the connecting device (1, 2).

8. Connecting device (1, 2) according to any of the preceding claims, **characterized by** the following features:
- the connecting device (1, 2) is designed as a two-component part (1, 2) having a first component (2a) and a second component (2b);
- the first component (2a) has the first connecting surface (11) and the second connecting surface (12) and is formed from a first plastics material; and
- the second component (2b) has the stop surface (14) and is formed from a second plastics material.

9. Connecting device (1, 2) according to any of the preceding claims, **characterized in that** at least one recess (15) is provided on the stop surface (14).

10. Connecting device (1, 2) according to any of the preceding claims, **characterized in that** the connecting device (1, 2) has a ventilation connection (25) which is fluidically connected to the through-opening (13) of the connecting device (1, 2).

11. Expansion tank (80) for an operating fluid tank (50), comprising the following features:
- an expansion tank wall (81) for limiting an expansion tank volume (84);
- the expansion tank wall (81) encloses an opening (85) of the expansion tank (80), through which a fluid exchange between the expansion tank volume (84) and the atmosphere is made possible, such that the expansion tank volume (84) is variable;
- in the case of underpressure in the expansion tank (80) with respect to the atmosphere, the expansion tank volume (84) increases;
- in the case of overpressure in the expansion tank (80) with respect to the atmosphere, the expansion tank volume (84) decreases,
the expansion tank (80) being **characterized in that** the expansion tank (80) is connected to a connecting device (1, 2) according to any of the preceding claims, an inner surface (82) of the expansion tank wall (81) that encloses the opening (85) of the expansion tank (80) being connected to the first connecting surface (11) of the connecting device (1, 2).

12. Expansion tank (80) according to claim 10, **characterized by** the following features:
- the expansion tank (80) has a connecting device (1, 2) according to claim 3 or according to a claim dependent on claim 4; and
- the expansion tank (80) has a protective cover (90) which is attached to the connecting device (1, 2) by means of the attachment means (17).

13. Operating fluid tank (50) for a motor vehicle for receiving an operating fluid, the operating fluid tank (50) having an expansion tank (80) which is at least indirectly fluidically connected to the atmosphere, the operating fluid tank (50) having the following features:
- in the case of overpressure in the operating fluid tank (50) with respect to the atmosphere, an expansion tank volume (84) decreases;
- in the case of underpressure in the operating fluid tank (50) with respect to the atmosphere, the expansion tank volume (84) increases,
the operating fluid tank (50) being **characterized in that**
- the expansion tank (80) is connected to the operating fluid tank (50) by means of a connecting device (1, 2) according to any of claims 1 to 10,
- the inner surface (82) of the expansion tank wall (81) that encloses an opening (85) of the expansion tank (80) is connected to the first connecting surface (11) of the connecting device (1, 2), and
- the inner surface (52) of the operating fluid tank wall (51) is connected to the second connecting surface (12) of the connecting device (1, 2).

14. Operating fluid tank (50) according to claim 13, **characterized by** the following features:
- the inner surface (82) of the expansion tank wall (81) is welded to the first connecting surface (11) of the connecting device (1, 2); and/or
- the inner surface (52) of the operating fluid tank wall (51) is welded to the second connecting surface (12) of the connecting device (1, 2).

15. Operating fluid tank (50) according to either claim 13 or claim 14, **characterized by** the following features:
- the operating fluid tank (50) has a connecting device (1, 2) according to claim 4 or according to a claim dependent on claim 3; and
- the operating fluid tank (50) has a protective cover (90) which is attached to the connecting device (1, 2) by means of the attachment means (17) of said connecting device, such that the protective cover (90) is arranged between the operating fluid tank wall (51) and the expansion tank wall (81).

## Revendications

1. Dispositif de raccordement (1, 2) permettant de raccorder un réservoir de compensation (80) à un réservoir de liquide de fonctionnement (50) pour un véhicule automobile, de sorte que le réservoir de compensation (80) est disposé dans un espace intérieur de réservoir de liquide de fonctionnement (53), **caractérisé en ce que** le dispositif de raccordement (1, 2) présente les caractéristiques suivantes :
- une première surface de raccordement (11) s'étendant autour d'une ouverture traversante (13) du dispositif de raccordement (1, 2) et permettant le raccordement par liaison de matière à une surface intérieure (82) d'une paroi de réservoir de compensation (81) ; et
- une seconde surface de raccordement (12) s'étendant autour de l'ouverture traversante (13) du dispositif de raccordement (1, 2) et permettant le raccordement par liaison de matière à une surface intérieure (52) d'une paroi de réservoir de liquide de fonctionnement (51).

2. Dispositif de raccordement (1, 2) selon la revendication 1, **caractérisé en ce que** le dispositif de raccordement (1, 2) présente une surface de butée (14) permettant de limiter un mouvement de compression du réservoir de compensation (80).

3. Dispositif de raccordement (1, 2) selon l'une des revendications précédentes, **caractérisé par** les caractéristiques suivantes :
- le dispositif de raccordement (1, 2) présente un premier système de positionnement (16) ; et
- le dispositif de raccordement (1, 2) peut être fixé au réservoir de liquide de fonctionnement (50) dans une position angulaire prédéterminée à l'aide du premier système de positionnement (16).

4. Dispositif de raccordement (1, 2) selon l'une des revendications précédentes, **caractérisé par** les caractéristiques suivantes :
- le dispositif de raccordement (1, 2) présente un système de fixation (17) permettant de fixer un couvercle de protection (90) ; et
- le système de fixation (17) est disposé entre la première surface de raccordement (11) et la seconde surface de raccordement (12).

5. Dispositif de raccordement (1, 2) selon la revendication 4, **caractérisé en ce que** le système de fixation (17) présente au moins une rainure d'encliquetage (17).

6. Dispositif de raccordement (1, 2) selon la revendication 4 ou 5, **caractérisé par** les caractéristiques suivantes :
- le dispositif de raccordement (1, 2) présente un second système de positionnement (18) ; et
- le couvercle de protection (90) peut être fixé au dispositif de raccordement (1, 2) dans une position angulaire prédéterminée à l'aide du second système de positionnement (18).

7. Dispositif de raccordement (1, 2) selon l'une des revendications précédentes, **caractérisé par** les caractéristiques suivantes :
- le dispositif de raccordement (1, 2) présente une surface de réception (20) qui est raccordée à la première surface de raccordement (11) ;
- la surface de réception (20) forme un angle (21) de plus de 90° avec la première surface de raccordement (11) ; et
- la surface de réception (20) est conçue pour recevoir une accumulation de matière (83) du réservoir de compensation (80) lors d'un processus de raccordement du réservoir de compensation (80) à la première surface de raccordement (11) du dispositif de raccordement (1, 2).

8. Dispositif de raccordement (1, 2) selon l'une des revendications précédentes, **caractérisé par** les caractéristiques suivantes :
- le dispositif de raccordement (1, 2) est conçu comme une pièce à deux composants (1, 2) comportant un premier composant (2a) et un second composant (2b) ;
- le premier composant (2a) présente la première surface de raccordement (11) et la seconde surface de raccordement (12) et est constitué d'une première matière plastique ; et
- le second composant (2b) présente la surface de butée (14) et est constitué d'une seconde matière plastique.

9. Dispositif de raccordement (1, 2) selon l'une des revendications précédentes, **caractérisé en ce qu'**au moins un évidement (15) est prévu sur la surface de butée (14).

10. Dispositif de raccordement (1, 2) selon l'une des revendications précédentes, **caractérisé en ce que** le dispositif de raccordement (1, 2) présente un raccord de ventilation (25) qui est en liaison fluidique avec l'ouverture traversante (13) du dispositif de raccordement (1, 2).

11. Réservoir de compensation (80) pour un réservoir de liquide de fonctionnement (50) présentant les caractéristiques suivantes :
- une paroi de réservoir de compensation (81) permettant de limiter un volume de réservoir de compensation (84) ;
- la paroi de réservoir de compensation (81) renferme une ouverture (85) du réservoir de compensation (80) laquelle permet un échange de fluide entre le volume de réservoir de compensation (84) et l'atmosphère, de sorte que le volume de réservoir de compensation (84) est variable ;
- lors d'une dépression dans le réservoir de compensation (80) par rapport à l'atmosphère, le volume de réservoir de compensation (84) augmente ;
- lors d'une surpression dans le réservoir de compensation (80) par rapport à l'atmosphère, le volume de réservoir de compensation (84) diminue,
le réservoir de compensation (80) étant **caractérisé en ce que** le réservoir de compensation (80) est raccordé à un dispositif de raccordement (1, 2) selon l'une des revendications précédentes, une surface intérieure (82) de la paroi de réservoir de compensation (81) renfermant l'ouverture (85) du réservoir de compensation (80) étant raccordée à la première surface de raccordement (11) du dispositif de raccordement (1, 2).

12. Réservoir de compensation (80) selon la revendication 10, **caractérisé par** les caractéristiques suivantes :
- le réservoir de compensation (80) présente un dispositif de raccordement (1, 2) selon la revendication 3 ou selon une revendication dépendante de la revendication 4 ; et
- le réservoir de compensation (80) présente un couvercle de protection (90) qui est fixé au dispositif de raccordement (1, 2) au moyen du système de fixation (17) de celui-ci.

13. Réservoir de liquide de fonctionnement (50) pour un véhicule automobile permettant de recevoir un liquide de fonctionnement, le réservoir de liquide de fonctionnement (50) présentant un réservoir de compensation (80) qui est au moins indirectement en liaison fluidique avec l'atmosphère, le réservoir de liquide de fonctionnement (50) présentant les caractéristiques suivantes :
- lors d'une surpression dans le réservoir de liquide de fonctionnement (50) par rapport à l'atmosphère, un volume de réservoir de compensation (84) diminue ;
- lors d'une dépression dans le réservoir de liquide de fonctionnement (50) par rapport à l'atmosphère, le volume de réservoir de compensation (84) augmente,
le réservoir de liquide de fonctionnement (50) étant **caractérisé en ce que**
- le réservoir de compensation (80) est raccordé au réservoir de liquide de fonctionnement (50) au moyen d'un dispositif de raccordement (1, 2) selon l'une des revendications 1 à 10,
- la surface intérieure (82) de la paroi de réservoir de compensation (81) entourant une ouverture (85) du réservoir de compensation (80) étant raccordée à la première surface de raccordement (11) du dispositif de raccordement (1, 2), et
- la surface intérieure (52) de la paroi de réservoir de liquide de fonctionnement (51) étant raccordée à la seconde surface de raccordement (12) du dispositif de raccordement (1, 2).

14. Réservoir de liquide de fonctionnement (50) selon la revendication 13, **caractérisé par** les caractéristiques suivantes :
- la surface intérieure (82) de la paroi de réservoir de compensation (81) est soudée à la première surface de raccordement (11) du dispositif de raccordement (1, 2) ; et/ou
- la surface intérieure (52) de la paroi de réservoir de liquide de fonctionnement (51) est soudée à la seconde surface de raccordement (12) du dispositif de raccordement (1, 2).

15. Réservoir de liquide de fonctionnement (50) selon la revendication 13 ou 14, **caractérisé par** les caractéristiques suivantes :
- le réservoir de liquide de fonctionnement (50) présente un dispositif de raccordement (1, 2) selon la revendication 4 ou selon une revendication dépendante de la revendication 3 ; et
- le réservoir de liquide de fonctionnement (50) présente un couvercle de protection (90) qui est fixé au dispositif de raccordement (1, 2) au moyen du système de fixation (17) de celui-ci, de sorte que le couvercle de protection (90) est disposé entre la paroi de réservoir de liquide de fonctionnement (51) et la paroi de réservoir de compensation (81).
